# EUROPÄISCHE PATENTSCHRIFT

(11) **EP 3 060 419 B1**
(45) Veröffentlichungstag und Bekanntmachung des Hinweises auf die Patenterteilung: **11.03.2020**
(21) Anmeldenummer: 14802326.0
(22) Anmeldetag: 24.10.2014
(51) Int. Cl.: B60J 5/04

(54) **ZWEITEILIGES BAUTEIL**
TWO-PART COMPONENT
PIÈCE EN DEUX PARTIES

(30) Priorität: 25.10.2013 DE 102013221739
(43) Veröffentlichungstag der Anmeldung: 31.08.2016
(73) Patentinhaber: MAGNA STEYR Engineering AG & Co KG, 8041 Graz (AT)
(72) Erfinder: HASELWANTER, Alexander, A-8010 Graz (AT); TEMUR, Aytac, 85551 Kirchheim (DE); WENING, Jürgen, 90451 Nürnberg (DE)
(74) Vertreter: Glawe, Delfs, Moll
(86) Internationale Anmeldenummer: PCT/EP2014/072858
(87) Internationale Veröffentlichungsnummer: WO 2015/059279

(56) Entgegenhaltungen:
- DE-A1-102005 019 016
- DE-A1-102009 009 808
- US-A1- 2006 006 697
- US-A1- 2010 072 785

## Beschreibung

### Gebiet der Erfindung

Die vorliegende Erfindung betrifft ein zweiteiliges Bauteil für eine Fahrzeugkarosserie umfassend ein Außenblech und ein Innenblech und ein Verfahren zur Herstellung eines solchen zweiteiligen Bauteils.

### Stand der Technik

Derartige zweiteilige Bauteile werden insbesondere für Türen, Klappen und Deckel von Fahrzeugen verwendet, beispielsweise für Schiebetüren oder gewöhnliche Autotüren. Dabei wird meist ein dickeres Innenblech verwendet, dass die Struktursteifigkeit des Bauteils gewährleistet und als Stütze für Anbauten wie Scharniere dient. Ein dünneres Außenblech wird üblicherweise im Bereich der Ränder von Außenblech und Innenblech mit dem Innenblech verbunden, insbesondere verschweißt.

Eine typische derartige Verbindung eines Außenblechs mit einem Innenblech kann so gebildet sein, dass das Außenblech zu dessen Innenseite hin, das bedeutet immer zur Seite des Innenblechs hin bzw. zum Inneren des Fahrzeugs hin, am Rand umgebogen ist. Auf diesen umgebogenen Rand trifft an der nunmehrigen Innenseite des umgebogenen Außenblechs die Kante des Innenblechs. Im Kontaktbereich dieser Kante sind die beiden Bleche miteinander verschweißt. In dieser üblichen Konstellation tritt zwischen der Innenseite des umgebogenen Außenblechs und der Außenseite des Innenblechs ein Spalt auf, der zur Vermeidung von Korrosion mit Wachs besprüht werden muss.

Als Stand der Technik werden z.B. die Dokumente US2010/0072785 A1 oder US2006/0006697 A1 genannt.

### Zusammenfassung der Erfindung

Es ist eine Aufgabe der Erfindung, ein zweiteiliges Bauteil für eine Fahrzeugkarosserie umfassend ein Außenblech und ein Innenblech anzugeben, dass einfach herstellbar ist und dabei eine sichere Verbindung der Bauteile gewährleistet. Eine Aufgabe der Erfindung ist es auch, ein derartiges zweiteiliges Bauteil anzugeben, dass ohne Korrosionsschicht auskommt. Eine weitere Aufgabe der Erfindung ist es, ein Verfahren zur Herstellung eines derartigen zweiteiligen Bauteils anzugeben.

Die Lösung der Aufgabe erfolgt durch eine zweiteiliges Bauteil für eine Fahrzeugkarosserie umfassend ein Außenblech und ein Innenblech, wobei das Außenblech mit dem Innenblech entlang deren Rändern zumindest in einem Verbindungsabschnitt derart verbunden ist, dass in einem ersten Bereich des Außenblechs das Außenblech und das Innenblech parallel zueinander verlaufen, wobei im ersten Bereich ein Haftmaterial zwischen Außenblech und Innenblech eingebracht ist, und wobei in einem zweiten Bereich des Außenblechs das Außenblech gegen die Innenseite des Innenblechs gebogen ist, wobei im zweiten Bereich des Außenblechs der äußerste Rand des Außenblechs mit der Innenseite des Innenblechs entlang des Verbindungsabschnitts verschweißt ist.

Erfindungsgemäß liegt das Außenblech am äußersten Rand in einem spitzen Winkel auf der Innenseite des Innenblechs an. Dieser spitze Winkel zwischen dem Rand des Außenblechs und dem innenseitigen Rand des Innenblechs beträgt 12 - 27 Grad, insbesondere ca. 25 Grad oder ca. 15 Grad. Auf diese Weise kann eine gute Zugänglichkeit zur Verschweißung der Bleche erreicht werden. Weiters wird dadurch eine ausreichende Ausgasung bzw. Verdampfung der auf den Blechen für gewöhnlich aufgebrachten Zinkschicht erreicht. Außerdem kann damit ein ausreichender Durchfluss im entstehenden Hohlraum zwischen Außenblech und Innenblech für einen später erfolgenden Beschichtungsvorgang erreicht werden.

Der zweite Bereich ist demnach ein Bereich des Außenblechs, der randseitiger liegt als der erste Bereich des Außenbleches und erstreckt sich bis zum Ende des Außenbleches, also inklusive der stirnseitigen Kante des Außenblechs.

Am äußersten Rand des Außenblechs, also insbesondere an der Kante des Außenbleches, sind Außenblech und Innenseite des Innenblechs durch eine Schweißnaht miteinander verbunden.

Im ersten, vom Rand weiter entfernten Bereich des Außenblechs ist dieses mit dem Innenblech verklebt.

Ein "Verbindungsabschnitt" erstreckt sich abschnittsweise entlang der Ränder von Außen- und Innenblech und steht daher normal auf die Abfolge von erstem und zweitem Bereich. Beispielsweise kann ein Eckabschnitt des zweiteiligen Bauteils auch nicht als erfindungsgemäßer Verbindungsabschnitt ausgeführt sein und daher beispielsweise keine Biegung des Außenblechs aufweisen.

Erfindungsgemäß wird dadurch nicht nur eine besonders stabile Verbindung mittels einer gut zugänglichen Schweißnaht erreicht, sondern kann zudem auf den Einsatz von Wachs oder anderen Korrosionsschutzmitteln an den Berührungslinien der beiden Bleche verzichtet werden.

Ein erfindungsgemäßes Verfahren zur Herstellung eines zweiteiligen Bauteils umfasst die Schritte, dass auf ein Außenblech im ersten Bereich ein Haftmaterial aufgebracht wird, ein Innenblech im ersten Bereich auf das Außenblech gelegt wird, im zweiten Bereich das Außenblech gegen die Innenseite des Innenblechs gebogen wird, so dass das Außenblech am äußersten Rand in einem spitzen Winkel (α), welcher zwischen 12 und 27 Grad beträgt, auf der Innenseite des Innenblechs anliegt, und der äußerste Rand des

Außenblechs mit der Innenseite des Innenblechs entlang des ersten Verbindungsabschnitts verschweißt wird.

Weiterbildungen der Erfindung sind in den abhängigen Ansprüchen, der Beschreibung sowie den beigefügten Zeichnungen angegeben.

Bevorzugt ist das Außenblech mit dem Innenblech entlang deren Rändern am gesamten Umfang des Bauteils derart verbunden, dass das Außenblech und das Innenblech bereichsweise parallel zueinander verlaufen und dort, also im parallel verlaufenden Bereich der Bleche entlang des gesamten Umfangs, ein Haftmaterial zwischen Außenblech und Innenblech eingebracht ist. Der parallele Verlauf der Bleche liegt in den Verbindungsabschnitten im "ersten Bereich", erstreckt sich bevorzugt aber auch über Abschnitte entlang des Umfangs des Bauteils die keinen "Verbindungsabschnitt" darstellen, insbesondere über Eckabschnitte, so dass auch in Eckabschnitten eine Haftung und Dichtung durch das eingebrachte Haftmaterial gewährleistet ist. Dadurch entsteht innerhalb des mit Haftmaterial versehenen Umfangs des zweiteiligen Bauteils, zwischen Außenblech und Innenblech, ein Trockenraum.

Wie im Fahrzeugkarosseriebau üblich, sind die Blechstärken des Außen und Innenbleches meist im Bereich von ca. 0,8 mm.

Der Radius der Biegung oder Bördelung des Außenblechs gegen das Innenblech beträgt bei einer einfachen Biegung bevorzugt mindestens 2,5 mm, vorzugsweise 3,8 mm. Die Biegung kann auch durch einen doppelten Radius von jeweils mindestens 1 mm, beispielsweise etwa 1,1 mm oder etwa 1,9 mm mit einer ebenen Strecke zwischen den beiden Radien von mindestens 1 mm, beispielsweise etwa 1,1 mm dargestellt werden.

Zwischen der Biegung des Außenblechs und dem äußersten Rand des Außenblechs befindet sich gemäß einer Ausführungsform eine ebene Strecke des Außenbleches, wobei die ebene Strecke besonders bevorzugt parallel zum Außenblech und zum Innenblech verläuft.

Vorteilhaft beträgt die Länge der ebenen Strecke etwa 4 bis 5 mm.

Bevorzugt beträgt die Länge der abfallenden Strecke zwischen dem Ende der Biegung des Außenblechs zum Innenblech oder gegebenenfalls dem Ende der ebenen Strecke einerseits und der Verschweißung des Außenblechs mit dem Innenblech andererseits etwa 4 bis 6 mm.

Die Verschweißung zwischen Außenblech und Innenblech erfolgt am besten mittels Laserschweißen, insbesondere durch taktiles Laserschweißen, also Laserschweißen unter Verwendung von taktilen Sensoren. Auch andere Fügeverfahren kommen in Frage, wie beispielsweise Laserlöten.

Als Haftmaterial und gleichzeitig Dichtmaterial wird beispielsweise ein Kunststoff, bevorzugt Polyvinylchlorid (PVC), eingesetzt. Aber auch die Verwendung anderer im Karosseriebau üblicher Klebstoffe, wie beispielsweise Terokal, ist möglich.

### Kurzbeschreibung der Zeichnungen

Die Erfindung wird im Folgenden beispielhaft unter Bezugnahme auf die Zeichnungen beschrieben.
- Fig. 1: ist eine schematische Darstellung eines zweiteiligen Bauteils umfassend ein Außenblech und ein Innenblech aus dem Stand der Technik von der Seite.
- Fig. 2: ist eine schematische Darstellung eines erfindungsgemäßen zweiteiligen Bauteils umfassend ein Außenblech und ein Innenblech von der Seite.
- Fig. 3: ist eine schematische Darstellung eines erfindungsgemäßen zweiteiligen Bauteils umfassend ein Außenblech und ein Innenblech von oben.
- Fig. 4 a,b,c: sind schematische Darstellungen von Verfahrensschritten zur Herstellung eines erfindungsgemäßen zweiteiligen Bauteils entsprechend Fig. 2.
- Fig. 5 a,b,c,d: sind schematische Darstellungen von Verfahrensschritten zur Herstellung eines weiteren erfindungsgemäßen zweiteiligen Bauteils.
- Fig. 6: ist eine schematische Darstellung eines weiteren erfindungsgemäßen zweiteiligen Bauteils von der Seite.
- Fig. 7: ist eine schematische Darstellung eines weiteren erfindungsgemäßen zweiteiligen Bauteils von der Seite.

### Detaillierte Beschreibung der Erfindung

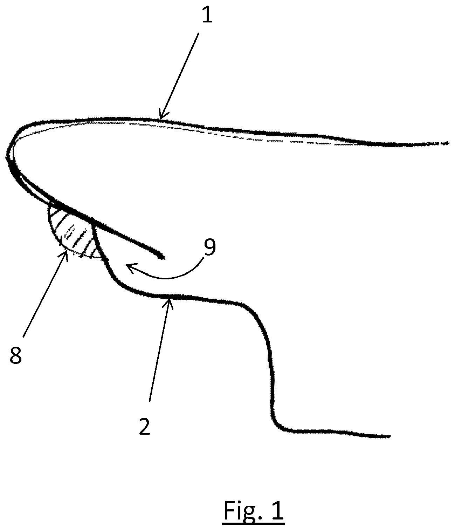

In Fig. 1 ist ein aus dem Stand der Technik bekanntes zweiteiliges Bauteil dargestellt, umfassend ein Außenblech 1 und ein Innenblech 2. Das Außenblech 1 ist zu dessen Innenseite hin, also zur Seite des Innenblechs 2 hin, am Rand umgebogen. Auf diesen umgebogenen Rand trifft an der nunmehrigen Innenseite des umgebogenen Außenblechs 1 die Kante des Innenblechs 2. Im Kontaktbereich dieser Kante sind die beiden Bleche 1, 2 durch eine Schweißnaht 8 miteinander verschweißt. In den Spalt zwischen der Innenseite des umgebogenen Außenblechs 1 und der Außenseite des Innenblechs 2 wird zur Vermeidung von Korrosion Wachs als Korrosionsschutz 9 gesprüht.

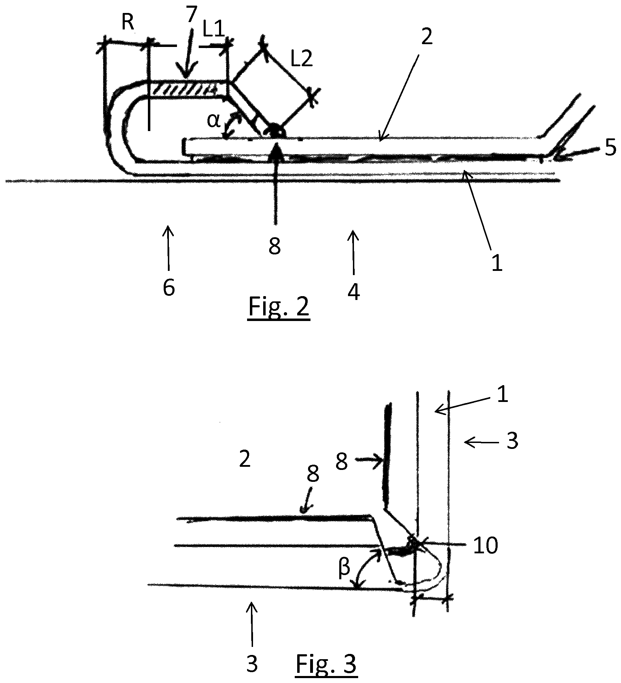

Ein erfindungsgemäßer zweiteiliger Bauteil ist in Fig. 2 von der Seite und in Fig. 3 in einem Eckbereich von oben dargestellt. Er umfasst ein Außenblech 1 und ein Innenblech 2, wobei das Außenblech 1 mit dem Innenblech 2 entlang deren Rändern in Verbindungsabschnitten 3, also außerhalb von Eckabschnitten 10, verbunden ist. Wie in Fig. 3 ersichtlich, bedürfen die Eckbereiche der Bleche 1,2 einer gesonderten Behandlung und stellen daher keine Verbindungsabschnitte im Sinn der Erfindung dar. Auch in den Eckabschnitten 10 ist jedoch PVC als Haft- und Dichtmaterial zwischen den beiden Blechen 1, 2 eingebracht. Der dargestellte Winkel β des Beschnitts des Außenblechs 1 im Eckbereich beträgt etwa 30 Grad.

Wie in Fig. 2 gut ersichtlich verlaufen in einem ersten Bereich 4 des Außenblechs 1 das Außenblech 1 und das Innenblech 2 parallel zueinander. Im ersten Bereich 4 ist PVC als Haftmaterial 5 und Dichtmaterial zwischen Außenblech 1 und Innenblech 2 eingebracht. In einem zweiten Bereich 6 des Außenblechs 1 ist das Außenblech 1 gegen die Innenseite des Innenblechs 2 gebogen. Der äußerste Rand des Außenblechs 1 liegt dabei an der Innenseite des Innenblechs 2 auf und ist mit dieser durch eine Schweißnaht 8 verschweißt.

Das Außenblech 1 liegt am äußersten Rand, insbesondere an dessen Kante, in einem spitzen Winkel α auf der Innenseite des Innenblechs 2 an. Das Außenblech 1 ist zum Innenblech 2 hin gebogen mit einem Radius R von mindestens 2,5 mm. Zwischen dieser Biegung des Außenblechs 1 und dem äußersten Rand des Außenblechs 1 verläuft das Außenblech 1 in einer ebenen Strecke 7, die parallel zum Außenblech 1 und zum Innenblech 2 im ersten Bereich 4 verläuft. Die Länge L1 der ebenen Strecke 7 beträgt ca. 5 bis 6 mm. An diese ebene Strecke schließt sich eine zum Innenblech 2 hin abfallende Strecke auf einer Länge L2 von ca. 4 - 5 mm an.

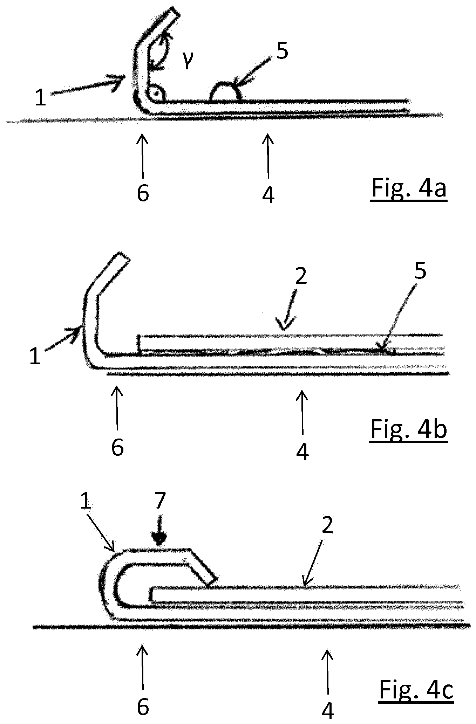

Schritte zur erfindungsgemäßen Herstellung eines zweiteiligen Bauteils gemäß Fig. 2 und 3 sind in den Fig. 4a, b und c dargestellt.

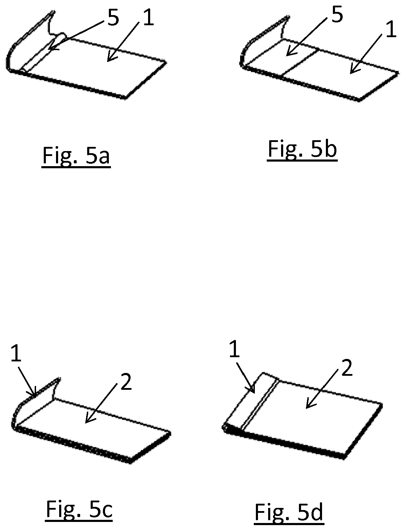

In Fig. 4a ist zunächst die Vorbereitung des Außenblechs 1 zu sehen. Der Kragen des Außenblechs 1 wird rechtwinkelig aufgestellt und an dessen Ende in einem Winkel γ von 165 Grad zum Außenblech 1 hin zurückgebogen. Hier sind natürlich auch andere Lösungen möglich, so kann beispielsweise der Winkel γ im Bereich zwischen 91 - 180 Grad ausgeführt sein, wie auch in den Fig. 5a-d ersichtlich. Auf das Außenblech 1 wird eine PVC-Raupe als Haftmaterial 5 aufgebracht. Wie in Fig. 4b dargestellt wird sodann das Innenblech 2 im ersten Bereich 4 auf das Außenblech 1 gelegt. Dabei verdichtet sich das PVC auf eine Dicke von etwa 0,2 - 0,3 mm. Schließlich wird, wie in Fig. 4c dargestellt, im zweiten Bereich 6 das Außenblech 1 weiter gegen die Innenseite des Innenblechs 2 gebogen und bevorzugt in dieser Stellung festgehalten, sodass der äußerste Rand des Außenblechs 1 mit der Innenseite des Innenblechs 2 durch Laserschweißen verschweißt werden kann.

Das Verfahren zur Herstellung eines zweiteiligen Bauteils ist auch in den Fig. 5a, b, c und d dargestellt, wobei hierbei das Außenblech 1 keine ebene Strecke 7 aufweist. In Fig. 5a wird, ähnlich wie in Fig. 4a, zunächst Haftmaterial 5 als Kleberaupe auf das Außenblech 1 aufgebracht und in Fig. 5b das Haftmaterial 5 zu einer dünnen Schicht verpresst. Danach wird - siehe Fig. 5c - das Innenblech 2 auf Außenblech 1 mit Haftmaterial 5 aufgelegt und das Außenblech 1 weiter umgebogen, so dass es schließlich - siehe Fig. 5d - mit dem Innenblech 2 verschweißt werden kann.

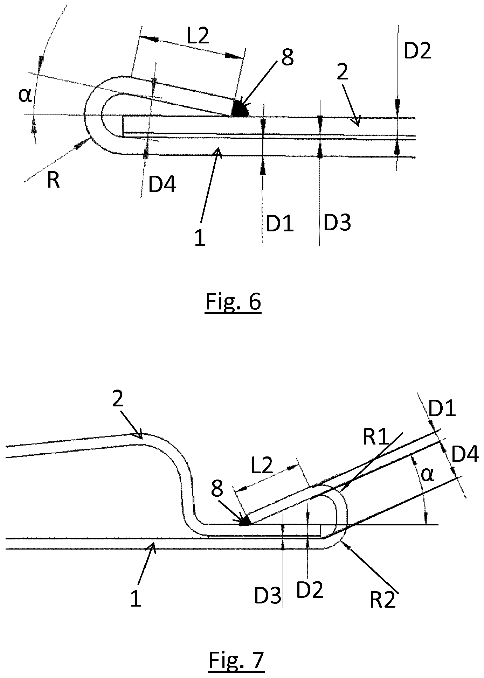

Erfindungsgemäße Bauteile ohne ebene Strecke sind in den Fig. 6 und Fig. 7 näher dargestellt. Dabei erfolgt die Biegung des Außenblechs 1 zum Innenblech 2 in Fig. 6 über einen einfachen Radius R von 3,8 mm, der zum Innenblech 2 hin in eine abfallende Strecke L2 der Länge 5 mm übergeht, deren Ende mit dem Innenblech 2 verschweißt ist. Der Winkel α beträgt in diesem Fall 15 Grad. Außenblech 1 und Innenblech 2 weisen eine Blechstärke D1 bzw. D2 von jeweils 0,8 mm auf. Die beiden Bleche sind im ersten parallel verlaufenden Bereich durch die Stärke der Haftmaterialschicht D3 von 0,2 mm voneinander getrennt. Der eingezeichnete Abstand D4 zwischen den Innenseiten des Außenblechs 1 vor und nach der Biegung beträgt 3 mm.

Die Ausführung der Fig. 7 unterscheidet sich vor allem dadurch von jener der Fig. 6, dass statt einer einfachen Biegung eine Biegung des Außenblechs durch die beiden Radien R1 und R2 von jeweils 1,9 mm erfolgt. Zwischen den beiden Radien Rl, R2 liegt eine gerade, vertikale Strecke von etwa 1,1 mm Länge. Die abfallende Strecke L2 hat wieder eine Länge von 5 mm. Der Winkel α beträgt in diesem Fall etwa 24 Grad. Das Außenblech 1 weist eine Blechstärke D1 von 0,75 mm auf, das Innenblech 2 eine Blechstärke D2 von 0,8 mm. Die Stärke der Haftmaterialschicht D3 beträgt 0,2 mm. Der Abstand D4 zwischen den Innenseiten des Außenblechs 1 vor und nach der Biegung beträgt wieder 3 mm.

### Bezugszeichenliste

- 1: Außenblech
- 2: Innenblech
- 3: Verbindungsabschnitt
- 4: erster Bereich
- 5: Haftmaterial
- 6: zweiter Bereich
- 7: ebene Strecke
- 8: Schweißnaht
- 9: Korrosionsschutz
- 10: Eckabschnitt

- α: Winkel
- β: Winkel
- γ: Winkel

- R: Radius Biegung
- R1: Radius Biegung
- R2: Radius Biegung
- L1: Länge ebene Strecke
- L2: Länge abfallende Strecke
- D1: Blechstärke
- D2: Blechstärke
- D3: Stärke der Haftmaterialschicht
- D4: Abstand

## Patentansprüche

1. Zweiteiliges Bauteil für eine Fahrzeugkarosserie umfassend ein Außenblech (1) und ein Innenblech (2), wobei das Außenblech (1) mit dem Innenblech (2) entlang deren Rändern zumindest in einem Verbindungsabschnitt (3) derart verbunden ist, dass in einem ersten Bereich (4) des Außenblechs (1) das Außenblech (1) und das Innenblech (2) parallel zueinander verlaufen,
wobei im ersten Bereich (4) ein Haftmaterial (5) zwischen Außenblech (1) und Innenblech (2) eingebracht ist, und in einem zweiten Bereich (6) des Außenblechs (1) das Außenblech (1) gegen die Innenseite des Innenblechs (2) gebogen ist, wobei im zweiten Bereich (6) des Außenblechs (1) der äußerste Rand des Außenblechs (1) mit der Innenseite des Innenblechs (2) entlang des Verbindungsabschnitts (3) verschweißt ist, **dadurch gekennzeichnet, dass** das Außenblech (1) am äußersten Rand in einem spitzen Winkel (α) auf der Innenseite des Innenblechs (2) anliegt, wobei der Winkel (α) zwischen 12 und 27 Grad beträgt.

2. Zweiteiliges Bauteil nach Anspruch 1,
**dadurch gekennzeichnet, dass** das Außenblech (1) mit dem Innenblech (2) entlang deren Rändern am gesamten Umfang des Bauteils derart verbunden ist, dass das Außenblech (1) und das Innenblech (2) bereichsweise parallel zueinander verlaufen und dort ein Haftmaterial (5) zwischen Außenblech (1) und Innenblech (2)

3. Zweiteiliges Bauteil nach zumindest einem der vorhergehenden Ansprüche,
**dadurch gekennzeichnet, dass** der Radius (R) der Biegung des Außenblechs (1) gegen das Innenblech (2) mindestens 2,5 mm beträgt oder als doppelter Radius (R1, R2) von jeweils mindestens 1 mm mit einer ebenen Strecke zwischen den beiden Radien von mindestens 1 mm ausgeführt ist.

4. Zweiteiliges Bauteil nach zumindest einem der vorhergehenden Ansprüche,
**dadurch gekennzeichnet, dass** sich zwischen der Biegung des Außenblechs (1) und dem äußersten Rand des Außenblechs (1) eine ebene Strecke (7) des Außenbleches (1) befindet, wobei die ebene Strecke (7) bevorzugt parallel zum Außenblech (1) und Innenblech (2) im ersten Bereich (4) verläuft.

5. Zweiteiliges Bauteil nach Anspruch 4,
**dadurch gekennzeichnet, dass** sich die ebene Strecke (7) zwischen der Biegung des Außenblechs (1) und einer zum äußersten Rand hin abfallenden Strecke befindet, wobei die abfallende Strecke im spitzen Winkel (α) auf der Innenseite des Innenblechs (2) anliegt.

6. Zweiteiliges Bauteil nach Anspruch 4 oder 5,
**dadurch gekennzeichnet, dass** die Länge (L1) der ebenen Strecke (7) etwa 5 bis 6 mm beträgt.

7. Zweiteiliges Bauteil nach zumindest einem der vorhergehenden Ansprüche,
**dadurch gekennzeichnet, dass** die Länge (L2) einer abfallenden Strecke zwischen dem Ende der Biegung des Außenblechs (1) zum Innenblech (2) oder gegebenenfalls dem Ende der ebenen Strecke (7) einerseits und der Verschweißung des Außenblechs (1) mit dem Innenblech (2) andererseits etwa 4 bis 6 mm beträgt.

8. Zweiteiliges Bauteil nach zumindest einem der vorhergehenden Ansprüche,
**dadurch gekennzeichnet, dass** die Verschweißung durch taktiles Laserschweißen oder Laserlöten erfolgt.

9. Zweiteiliges Bauteil nach zumindest einem der vorhergehenden Ansprüche,
**dadurch gekennzeichnet, dass** das Haftmaterial (5) ein Kunststoff, bevorzugt Polyvinylchlorid, ist.

10. Verfahren zur Herstellung eines zweiteiligen Bauteils nach zumindest einem der vorhergehenden Ansprüche,
**dadurch gekennzeichnet, dass** auf das Außenblech (1) im ersten Bereich (4) ein Haftmaterial (5) aufgebracht wird, das Innenblech (2) im ersten Bereich (4) auf das Außenblech (1) gelegt wird, im zweiten Bereich (6) das Außenblech (1) gegen die Innenseite des Innenblechs (2) gebogen wird, so dass das Außenblech (1) am äußersten Rand in einem spitzen Winkel (α), welcher zwischen 12 und 27 Grad beträgt, auf der Innenseite des Innenblechs (2) anliegt, und der äußerste Rand des Außenblechs (1) mit der Innenseite des Innenblechs (2) entlang des Verbindungsabschnitts (3) verschweißt wird.

## Claims

1. Two-part component for a vehicle body, comprising an external panel (1) and an internal panel (2), wherein the external panel (1) is connected to the internal panel (2) at least in one connection portion (3) along the peripheries of said panels (1, 2) in such a manner that in a first region (4) of the external panel (1) the external panel (1) and the internal panel (2) run so as to be mutually parallel, wherein in the first region (4) a bonding material (5) is incorporated between the external panel (1) and the internal panel (2), and in a second region (6) of the external panel (1) the external panel (1) is bent towards the internal side of the internal panel (2), wherein in the second region (6) of the external panel (1) the outermost periphery of the external panel (1) along the connection portion (3) is welded to the internal side of the internal panel (2),
**characterized in that** the external panel (1) on the outermost periphery bears on the internal side of the internal panel (2) at an acute angle (α), wherein the angle (α) is between 12 and 27 degrees.

2. Two-part component according to Claim 1, **characterized in that** the external panel (1) is connected to the internal panel (2) along the peripheries of said panels (1, 2) on the entire circumference of the component in such a manner that the external panel (1) and the internal panel (2) in regions run so as to be mutually parallel and a bonding material (5) is incorporated therein between the external panel (1) and the internal panel (2).

3. Two-part component according to at least one of the preceding claims,
**characterized in that** the radius (R) of the bend of the external panel (1) towards the internal panel (2) is at least 2.5 mm, or is embodied as a double radius (R1, R2) of in each case at least 1 mm, having a planar section of at least 1 mm between the two radii.

4. Two-part component according to at least one of the preceding claims,
**characterized in that** a planar section (7) of the external panel (1) is situated between the bend of the external panel (1) and the outermost periphery of the external panel (1), wherein the planar section (7) in the first region (4) preferably runs so as to be parallel with the external panel (1) and the internal panel (2).

5. Two-part component according to Claim 4, **characterized in that** the planar section (7) is situated between the bend of the external panel (1) and a section that slopes towards the outermost periphery, wherein the sloping section bears on the internal side of the internal panel (2) at the acute angle (α).

6. Two-part component according to Claim 4 or 5, **characterized in that** the length (L1) of the planar section (7) is approximately 5 to 6 mm.

7. Two-part component according to at least one of the preceding claims,
**characterized in that** the length (L2) of a sloping section between the end of the bend of the external panel (1) towards the internal panel (2), or optionally the end of the planar section (7), on the one hand, and the weld of the external panel (1) to the internal panel (2), on the other hand, is approximately 4 to 6 mm.

8. Two-part component according to at least one of the preceding claims,
**characterized in that** the welding takes place by tactile laser welding or laser brazing/soldering.

9. Two-part component according to at least one of the preceding claims,
**characterized in that** the bonding material (5) is a plastics material, preferably polyvinyl chloride.

10. Method for producing a two-part component according to at least one of the preceding claims, **characterized in that** a bonding material (5) is applied to the external panel (1) in the first region (4); the internal panel (2) in the first region (4) is placed onto the external panel (1); the external panel (1) in the second region (6) is bent towards the internal side of the internal panel (2) such that the external panel (1) on the outermost periphery bears on the internal side of the internal panel (2) at an acute angle (α) which is between 12 and 27 degrees; and the outermost periphery of the external panel (1) along the connection portion (3) is welded to the internal side of the internal panel (2).

## Revendications

1. Pièce en deux parties pour une carrosserie de véhicule, comportant une tôle extérieure (1) et une tôle intérieure (2), la tôle extérieure (1) étant reliée à la tôle intérieure (2) le long de leurs bords au moins dans une portion de liaison (3) de telle sorte que la tôle extérieure (1) et la tôle intérieure (2) s'étendent parallèlement l'une à l'autre dans une première zone (4) de la tôle extérieure (1),
dans laquelle
dans la première zone (4), un matériau adhérant (5) est introduit entre la tôle extérieure (1) et la tôle intérieure (2), et dans une seconde zone (6) de la tôle extérieure (1), la tôle extérieure (1) est coudée contre la face intérieure de la tôle intérieure (2),
dans la seconde zone (6) de la tôle extérieure (1), le bord le plus à l'extérieur de la tôle extérieure (1) est soudé à la face intérieure de la tôle intérieure (2) le long de la portion de liaison (3),
**caractérisée en ce que**
au niveau du bord le plus à l'extérieur, la tôle extérieure (1) prend appui sur la face intérieure de la tôle intérieure (2) sous un angle aigu (α), l'angle (α) étant compris entre 12 et 27 degrés.

2. Pièce en deux parties selon la revendication 1,
**caractérisée en ce que**
la tôle extérieure (1) est reliée à la tôle intérieure (2) le long de leurs bords sur toute la périphérie de la pièce de telle sorte que la tôle extérieure (1) et la tôle intérieure (2) s'étendent localement parallèlement l'une à l'autre, et à cet endroit un matériau adhérant (5) est introduit entre la tôle extérieure (1) et la tôle intérieure (2).

3. Pièce en deux parties selon l'une au moins des revendications précédentes,
**caractérisée en ce que**
le rayon (R) du coudage de la tôle extérieure (1) contre la tôle intérieure (2) est d'au moins 2,5 mm ou est réalisé sous forme de rayon double (R1, R2) respectivement d'au moins 1 mm avec un trajet plan entre les deux rayons d'au moins 1 mm.

4. Pièce en deux parties selon l'une au moins des revendications précédentes,
**caractérisée en ce que**
un trajet plan (7) de la tôle extérieure (1) se situe entre le coudage de la tôle extérieure (1) et le bord le plus à l'extérieur de la tôle extérieure (1), le trajet plan (7) s'étendant de préférence parallèlement à la tôle extérieure (1) et à la tôle intérieure (2) dans la première zone (4).

5. Pièce en deux parties selon la revendication 4,
**caractérisée en ce que**
le trajet plan (7) se situe entre le coudage de la tôle extérieure (1) et un trajet descendant vers le bord le plus à l'extérieur, le trajet descendant prenant appui sous un angle aigu (α) sur la face intérieure de la tôle intérieure (2).

6. Pièce en deux parties selon la revendication 4 ou 5,
**caractérisée en ce que**
la longueur (L1) du trajet plan (7) est d'environ 5 à 6 mm.

7. Pièce en deux parties selon l'une au moins des revendications précédentes,
**caractérisée en ce que**
la longueur (L2) d'un trajet descendant entre l'extrémité du coudage de la tôle extérieure (1) vers la tôle intérieure (2) ou le cas échéant l'extrémité du trajet plan (7) d'une part et la soudure de la tôle extérieure (1) avec la tôle intérieure (2) d'autre part est d'environ 4 à 6 mm.

8. Pièce en deux parties selon l'une au moins des revendications précédentes,
**caractérisée en ce que**
le soudage s'effectue par soudage laser tactile ou par brasage laser.

9. Pièce en deux parties selon l'une au moins des revendications précédentes,
**caractérisée en ce que**
le matériau adhérant (5) est une matière plastique, de préférence du chlorure de polyvinyle.

10. Procédé de réalisation d'une pièce en deux parties selon l'une au moins des revendications précédentes,
**caractérisé en ce que**
un matériau adhérant (5) est appliqué sur la tôle extérieure (1) dans la première zone (4), la tôle intérieure (2) est posée sur la tôle extérieure (1) dans la première zone (4), la tôle extérieure (1) est coudée contre la face intérieure de la tôle intérieure (2) dans la seconde zone (6), de telle sorte qu'au niveau du bord le plus à l'extérieur, la tôle extérieure (1) prend appui contre la face intérieure de la tôle intérieure (2) sous un angle aigu (α) compris entre 12 et 27 degrés, et que le bord le plus à l'extérieur de la tôle extérieure (1) est soudé avec la face intérieure de la tôle intérieure (2) le long de la portion de liaison (3).
